(19) Europäisches Patentamt
European Patent Office
Office européen des brevets

(11) **EP 4 332 765 A1**

(12) **EUROPEAN PATENT APPLICATION**

(43) Date of publication:
06.03.2024 Bulletin 2024/10

(21) Application number: **23194040.4**

(22) Date of filing: **29.08.2023**

(51) International Patent Classification (IPC):
**G06F 9/48** *(2006.01)* **G06Q 10/0631** *(2023.01)*
**G06Q 10/0633** *(2023.01)* **H04L 41/5074** *(2022.01)*

(52) Cooperative Patent Classification (CPC):
**G06F 9/4843; G06F 9/485; G06F 9/4881;
G06Q 10/06311; G06Q 10/06312; G06Q 10/0633;
H04L 41/5074;** G06F 2209/5017; G06F 2209/5019

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 US 202217823755**

(71) Applicant: **Zendesk, Inc.**
**San Francisco, California 94103 (US)**

(72) Inventors:
• **BISWAS, Sanjeev Kumar**
**Singapore 018937 (SG)**
• **ANANTHANARARYANAN, Vancheswaran Koduvayur**
**Singapore 018937 (SG)**

(74) Representative: **D Young & Co LLP**
**120 Holborn**
**London EC1N 2DY (GB)**

(54) **SCHEDULING AUTOMATED WORKFLOWS TO CONSERVE COMPUTING RESOURCES**

(57) Systems and methods are provided for scheduling an automation (e.g., an automated workflow) to execute against a specified set of data (e.g., a customer support ticket) based on when time-based conditions within the automation will (or will likely) be true or satisfied with regard to the ticket. The automation's time-based conditions are represented by one or more functions designed to yield, when executed against a given ticket, a time interval during which those conditions will (or will likely) be true for that ticket. When a function produces a valid time interval, the corresponding automation is scheduled to run against the ticket during the interval. The functions may be quickly executed each time a ticket is modified (or created) because they may be created in assembly language or a native language of the computing platform that executes them.

FIG. 1

EP 4 332 765 A1

**Description**

**BACKGROUND**

This disclosure relates to the field of computer systems. More particularly, a system and methods are provided for scheduling automated workflows to conserve computing resources.

Organizations employ automated workflows for various purposes, such as to update stored data, adjust the amount and/or type of resources allocated to different tasks, perform derivative processing necessitated by a change to a set of data, etc. Such workflows may be initiated on a regular schedule, such as every hour for example.

However, it is often the case that a workflow scheduled on a regular or automatic basis may ultimately have no work to do, but this may not be known until the system that hosts the workflow has engaged in processing that consumes significant system resources. For example, an ETL (Extract, Transform, Load) workflow may run regularly to find sets of data (e.g., transactions, requests, customer support tickets) that match particular criteria and only execute specified actions upon matching datasets. This may require the workflow to comprehensively search a database or other data repository for matching datasets. The absence of matching datasets will not be discovered until the entire repository has been searched, thereby incurring possibly significant overhead (especially when run on a frequent schedule) without producing any benefit.

**SUMMARY**

Particular aspects are set out in the appended independent claims. Various optional embodiments are set out in the dependent claims.

In some embodiments, systems and methods are provided for intelligently scheduling automations and/or other workflows that comprise one or more conditions that, if true for a given set of data (e.g., a customer support ticket, a transaction), will cause one or more associated actions to be performed to modify that dataset and/or initiate some other activity. In particular, the automation includes one or more time-based conditions that are only true at certain times. An automation's associated action(s) cannot be performed unless and until the specified conditions are true or satisfied.

For example, an illustrative automation in these embodiments may contain a time-based condition that requires a customer support ticket to be in a particular state (such as "Pending") for a specified period of time (e.g., hours, days) in order to be true and enable an action to be performed (e.g., to upgrade the ticket). The automation may also include other time-based and/or non-time-based conditions for identifying tickets upon which to implement the automation's associated action or actions.

In some embodiments, when an automation that contains one or more time-based conditions is created or modified, an automation scheduling function (or simply a 'function') is generated to represent those conditions (e.g., in assembly language or a native language of the computing environment). In some implementations, separate functions may be generated for each evaluation path of an automation.

Afterward, each time a ticket is modified in some way (e.g., a value of a field of the ticket is changed), functions corresponding to any number of automations may be rapidly executed against the modified ticket. For each such automation, based on the parameters or field values of the ticket, a time interval during which the ticket will or should satisfy the automation may be identified. If no interval is identified for a given automation's scheduling function(s), the automation will never successfully run against the ticket (unless the ticket or automation is modified).

Based on the time interval identified for a given automation, the automation is scheduled to run against the ticket at some time during the interval. Illustratively, an event timer may be set to fire at that time and emit an event comprising data such as (automation_id, ticket_id) to identify the objects to be evaluated.

**DESCRIPTION OF THE FIGURES**

FIG. 1 is a block diagram depicting an environment in which automations are scheduled in a strategic manner, in accordance with some embodiments.

FIG. 2A shows illustrative automations that may be strategically scheduled, in accordance with some embodiments.

FIG. 2B depicts deconstruction of an automation into multiple separate paths, in accordance with some embodiments.

FIG. 3 is a flow chart illustrating a method of scheduling automations for execution, in accordance with some embodiments.

FIG. 4A is a flow chart illustrating a method of creating a new automation, in accordance with some embodiments.

FIG. 4B is a flow chart illustrating a method of modifying an existing automation, in accordance with some embodiments.

FIG. 5 is a flow chart illustrating a method of running an automation against existing tickets, in accordance with some embodiments.

## DETAILED DESCRIPTION

The following description is presented to enable any person skilled in the art to make and use the disclosed embodiments, and is provided in the context of one or more particular applications and their requirements. Various modifications to the disclosed embodiments will be readily apparent to those skilled in the art, and the general principles defined herein may be applied to other embodiments and applications without departing from the scope of those that are disclosed. Thus, the scope is not limited to the embodiments shown, but rather is to be defined by the appended claims.

In some embodiments, a system and methods are provided for strategically scheduling automations and/or other workflows based on time-based conditions specified by the automations. In these embodiments, a given automation is scheduled to run against a target dataset (e.g., a customer support ticket, a transaction) at a time that the system predicts the dataset will satisfy the automation. Thus, instead of scheduling an automation with some regularity (e.g., every hour), and incurring unproductive use of computing resources when the automation runs but no datasets satisfy its conditions, the automation only executes when it is determined that at least a threshold number of datasets (e.g., one) will satisfy the conditions.

Automations comprise conditions and actions. When all conditions of at least one path through an automation are true or satisfied by a target dataset, the action or actions are performed upon that dataset (and/or other processing is performed). In some embodiments, an automation that includes at least one time-based condition, and/or other automations, are scheduled in accordance with methods described herein. A time-based condition is satisfied at a particular time or during a specified period of time. To help prevent processing loops, an automation must either contain a condition that can be true only once or an action that nullifies at least one condition (e.g., by changing the value of a ticket parameter so that the condition can never again be satisfied).

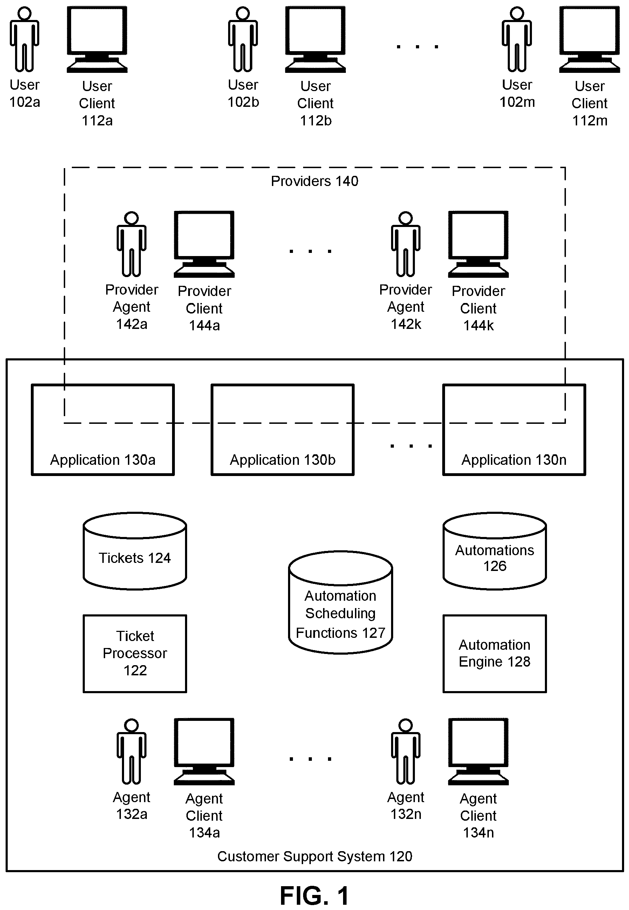

FIG. 1 is a diagram of a computing environment in which automations are scheduled in a strategic manner, according to some embodiments.

In the environment of FIG. 1, an organization provides applications and operates customer support system 120 to support use of the applications. In particular, customer support system 120 hosts applications 130 (e.g., applications 130a - 130n) and provides assistance for those applications via agents 132a - 132n, which operate agent clients 134a - 134n. In some implementations, however, customer support system 120 and applications 130 may be provided by different entities. Thus, although applications 130 are depicted as residing within customer support system 120 in FIG. 1, in some embodiments the applications may be distinct from the customer support system.

Each application 130 is used (e.g., subscribed to) by any number of providers 140 (e.g., businesses, governmental entities, and/or other organizations) to interact with end users 102a - 102m, which access the applications via user clients 112a - 112m. Providers 140 may offer limited assistance to users 102 via provider agents 142a - 142k and provider clients 144a - 144k.

End user clients 112 are coupled to providers 140, which in turn are coupled to customer support system 120. End user clients 112 access the physical and/or virtual computers that host applications 130 via any number and type of communication links. For example, some user clients 112 may execute installed software for accessing any or all applications; this software may be supplied by providers 140 and/or customer support system 120. Other user clients 112 may execute browser software that communicates with web servers that are associated with (e.g., host) applications 130. The web servers may be operated by customer support system 120, the organization that hosts customer support system 120, and/or individual providers 140.

In some implementations, a user client 112 may access customer support system 120 and applications 130 directly (e.g., via one or more networks such as the Internet); in other implementations, a user client 112 may first connect to a provider 140 (e.g., a website associated with a particular provider) and be redirected to customer support system 120. In yet other implementations, one or more applications 130 may execute upon computer systems operated by a provider 140, in which case application data are reported to or retrieved by customer support system 120.

End users 102 use applications 130 in the context of particular providers. In other words, each user session with an application is associated with at least one provider 140. The context may be set when an end user is redirected to customer support system 120 from the corresponding provider's site, when the end user logs in using credentials provided by the provider, or in some other way.

When an end user 102 has a problem or question about a product or service offered by a provider 140, the end user can access customer support system 120, via a provider 140, to obtain assistance. For example, a user 102 of a provider 140 that sells retail goods may need help canceling an order that was erroneously entered. This help may be provided by a live provider agent 142 and/or by an automated agent (e.g., a bot). In addition to or instead of assisting end users and/or providers with applications 130, a provider agent 142 or a customer support agent 132 may offer information and/or services, such as product support, operating instructions, a package-delivery service, etc.

Providers 140 may contact the organization that hosts customer support system 120 with questions or problems. For example, a provider 140 may have questions regarding how to configure the provider's instance of an application 130 or a session with an application 130. As another example, a provider 140 may have suffered data loss or some other performance problem associated with the provider's instance or session with an application. In such a case, the provider may seek help from the organization that hosts customer support system 120 with an agent 132 and/or an automated bot of the customer support system.

Customer support system 120 manages user/provider issues and contacts using ticket processor 122 and tickets 124, and other resources as necessary. In the illustrated embodiments, a ticket may represent an electronic conversation between entities depicted in Fig. 1, such as a provider 140 and customer support system 120, an end user 102 and a provider 140, or an end user 102 and customer support system 120. Ticket processor 122 comprises a set of software and/or hardware resources that generate or register a new ticket 124, and that update the ticket over time as various actions are performed and/or further communications are exchanged. End users 102 and providers 140 may submit tickets through a variety of channels, including electronic mail, web form, chat, call, text, and social media post. Each ticket 124 includes various data and metadata associated with the issue and actions taken to resolve it. Ticket database or repository 124 may take any form and may be centralized or distributed.

An example ticket includes a ticket identifier and pertinent information (or links to pertinent information). The information may include multiple fields and corresponding values that identify a user having a problem (and possibly an associated provider); describe the issue; identify the application, service, or product associated with the issue; indicate the current status of the ticket or issue; identify when actions were taken regarding the ticket or issue (e.g., with timestamps); report interactions between the user and one or more agents regarding the issue; etc.

Automations 126, as described above, are workflows or other processes that can be scheduled to run at predetermined times against specified tickets to evaluate the automation's specified conditions against the ticket and take one or more actions when the conditions are satisfied. Tickets that satisfy the conditions of an automation (e.g., one or more paths through the automation, as discussed below) may be termed 'qualified' or 'target' tickets.

In some situations, an automation may be configured to search through one or more ticket repositories (e.g., tickets 124) to identify qualified tickets among existing or preexisting tickets. In other embodiments, an automation may be configured to examine only specified tickets instead of conducting a general search.

Automation engine 128 may assist in the creation of new automations (e.g., by presenting a user interface for the purpose), may deconstruct an automation into constituent paths as described below, may generate and maintain automation scheduling functions (or simply "functions") 127 for determining when time-based conditions of a new automation will or may be satisfied, may schedule a given automation to run against a given ticket (e.g., with a timer), may run the automation against the ticket, and/or facilitate or perform other actions.

In some embodiments, agents 132 of customer support system 120 and/or agents 142 of a provider 140 may configure particular or customized automations for automation engine 128. For example, the customer support system's organization may wish to escalate tickets 124 that are submitted by "VIP" providers if those tickets have not been resolved within a specified period of time. Likewise, a provider 140 may wish to escalate tickets 124 that are submitted by "VIP" end users 102. In other embodiments, automation engine 128 maintains a default set of automations that perform common actions and that are available to some or all providers 140. For example, an organization such as Zendesk, Inc. may host customer support system 120 and provide default automations such as those described at the web page located at https://support.zendesk.com/hc/en-us/articles/440883 5051546-About-the-Support-default-automations.

Due to the number of automations, the amount of processing time and/or other computing resources needed to execute automations (e.g., storage space, communication bandwidth), and the number of tickets that may need to be searched or examined, customer support system 120 may comprise a distributed computing system including multiple computers and data storage devices that cooperate to manage and resolve customer tickets. For example, when customer support system 120 (e.g., as provided by Zendesk, Inc.) supports multiple providers that provide applications 130 to end users, millions of new tickets may be created each day and, in addition, hundreds of thousands of existing tickets may be modified or updated in a typical hour, meaning that tens of millions of tickets may be changed every day.

These numbers naturally grow as end users and/or providers are added, applications are added, etc. Customer support system 120 may host hundreds of automations, which may be specific to a given provider or be available to multiple providers. The scale of the problem - processing and managing vast numbers of tickets - is therefore readily apparent, and conservation of the computing resources that handle tickets and execute automations is highly desirable.

Many organizations schedule automations to run on a regular schedule (e.g., every hour) but, as described previously, when the automations run they may find few (or no) tickets upon which to execute after having consumed many resources to attempt to identify eligible or qualified tickets. Therefore, in some embodiments of systems and methods described herein, an automation that includes a time-based condition is scheduled to run on specified or target tickets at a time that the condition will likely be satisfied.

In general, a time-based condition involves examination of a ticket field that contains a specific time (or day or hour or month, etc.) or a period of time (e.g., some quantity of minutes, hours, days, etc.), and requires an examination of the current time (i.e., when the automation executes upon the ticket) to determine whether the condition is satisfied. Illustrative time-based conditions may relate to how long a field of a ticket (e.g., status, priority) has had a certain value or may determine whether the current time (the time when the condition is applied to a ticket) matches a specified time (or day or hour or month, etc.).

A condition that involves a measure of time but that is independent of the time at which the condition is examined, is not considered a time-based condition. For example, a condition that determines whether a ticket was created before 8:00am does not depend on the time at which the condition is applied to the ticket.

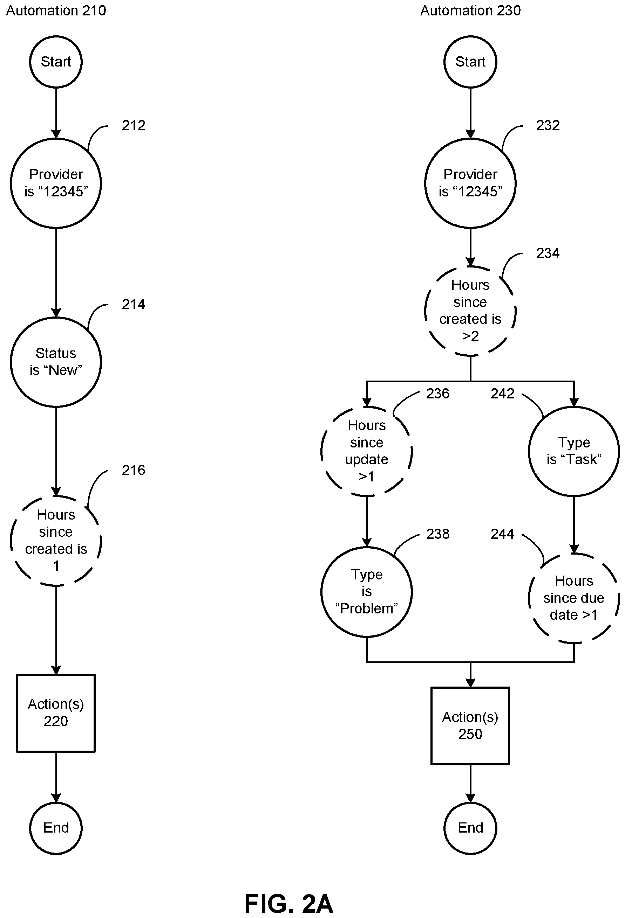

FIG. 2A shows illustrative automations that may be strategically scheduled, according to some embodiments. Time-based conditions are identified by dashed perimeter lines. Although embodiments are described below as they may be implemented to manage tickets submitted by end users and automations that execute upon the tickets, it will be understood that tickets may also (or instead) be submitted by providers.

In these embodiments, automation 210 is a simple automation that, when executed against or upon a given customer support ticket, applies non-time-based) conditions 212, 214 to determine whether the ticket is associated with a provider having the identifier 12345 and whether the ticket status is "New." Automation 210 also includes a time-based condition 216 to determine whether one hour has passed since the ticket was created (i.e., whether the ticket is at least one hour old). In some implementations, this condition will be true when the ticket is 60 minutes old or older, but less than 120 minutes. That is, the ticket must be one hour old, but not yet 2 (or more) hours old. If all of conditions 212, 214, 216 are satisfied or true, only then will action(s) 220 be implemented.

Actions generally involve altering in some way the ticket upon which it is executing, by modifying the value or values of one or more ticket fields. This may be done at least in part to nullify one of the conditions that caused action(s) 220 to be implemented, thereby preventing a processing loop. For example, an action 220 of automation 210 may change the ticket status to a value other than New (e.g., "Pending"). However, an action may also entail other activity, such as initiation of a communication (e.g., to an end user or an agent).

Automation 230 of FIG. 2A is more complex than automation 210 due to the inclusion of an OR operator. First, condition 232 is applied to determine whether the provider associated with a ticket upon which the automation is executing is 12345. Then, time-based condition 234 is applied to determine whether the ticket is at least two hours old (including three or more). At this point, the OR operator allows either (or both) of two branches to be satisfied and (assuming conditions 232, 234 are true) cause action(s) 250 to be performed.

Time-based condition 236 tests whether the ticket was last updated more than an hour in the past, and regular (non-time-based) condition 238 determines whether the ticket type is "Problem" (e.g., whether a 'type' field of the ticket has the value "Problem"). Condition 242 determines whether the ticket type is "Task" and time-based condition 244 is applied to determine whether a due date of the ticket (e.g., when it was supposed to be completed or resolved) passed more than an hour ago. As described above, action(s) 250 may include any type and number of operations that change the ticket and/or involve other activity.

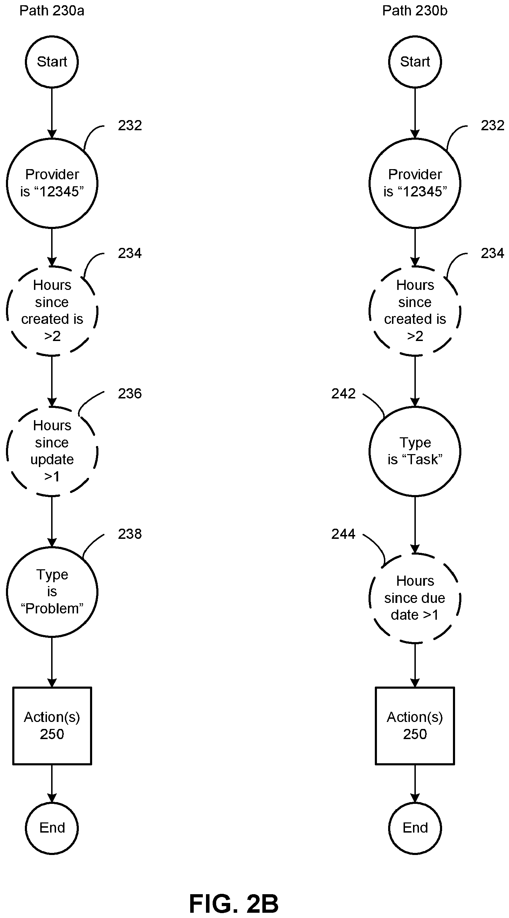

FIG. 2B depicts deconstruction of an automation into multiple separate paths, according to some embodiments. In FIG. 2B, automation 230 of FIG. 2A is deconstructed into paths 230a and 230b, wherein each path comprises a different branch of the OR operation.

Thus, path 230a comprises all conditions before the OR (i.e., conditions 232, 234) and all conditions that are reached through a first branch (i.e., conditions 236, 238). Path 230b comprises the conditions before the OR and all conditions reached through the second branch (i.e., conditions 242, 244). The number of paths into which an automation can be deconstructed depend upon the number of OR connections and the number of branches created by each OR.

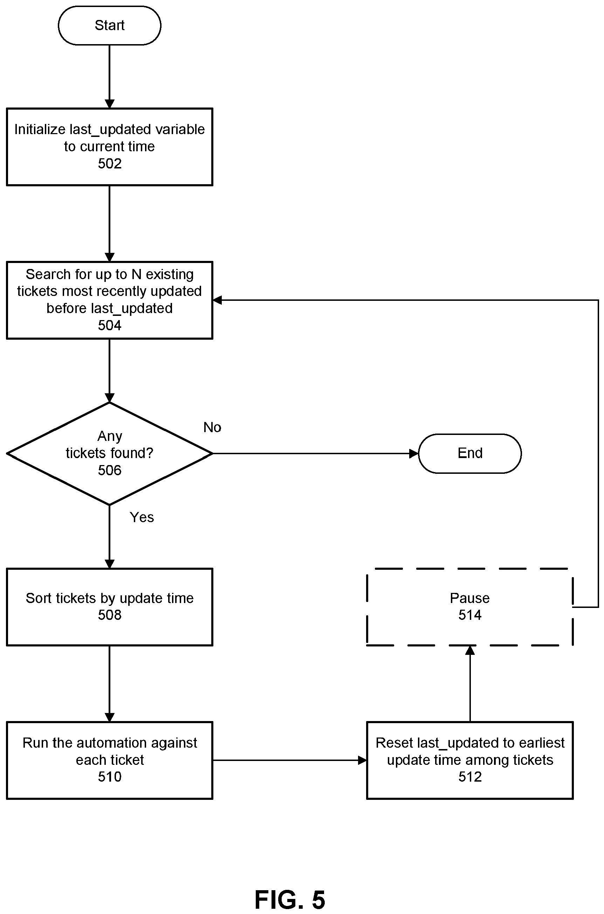

In some embodiments, when a new automation is created and starts being used, it may be initially run one or more times to search existing tickets (e.g., tickets created before the automation was put into use and that are not yet closed or resolved) and execute its action(s) upon qualified tickets. FIG. 5 and the accompanying text below describe an illustrative process for accomplishing this.

In parallel or afterward, and if it contains no time-based conditions, the automation may be scheduled to regularly or periodically run against selected tickets created or modified after the automation was put into use. However, if the new automation employs one or more time-based conditions, the scheduling may be performed strategically as will be described. It should be understood below that strategic scheduling of an automation may happen after or in parallel with execution of the automation against tickets that existed before the automation was created.

When an automation with one or more time-based conditions is created, automation engine 128 of FIG. 1 creates (and stores) functions (or "automation scheduling functions") that calculate when the time-based conditions will (or will likely) be true or satisfied. For a multi-path automation such as automation 230 of FIG. 2A, separate functions may be created for each path. Automation functions can be rapidly executed upon a ticket whenever it is modified because they may be written in assembly language or a native executable (e.g., javascript, a web-assembly function), or in a similar environment.

If a modified ticket is further modified before execution of an automation that had been scheduled for the ticket, the scheduled execution may be cancelled, one or more functions may be executed anew upon the further modified ticket, and the automation may be rescheduled appropriately. Similarly, when an automation with one or more time-based conditions is modified, previously scheduled executions of the automation may be retained or may be canceled (e.g., especially if one or more time-based conditions are added, removed, or revised) and its corresponding function(s) may be run against existing and/or new tickets. For example, modification of an automation's time-based conditions may cause the modified automation to be treated as a new automation.

Creation or definition of a function can be illustrated using automation 210 of FIG. 2A. The condition "Hours since created is 1" tests whether the created field of a ticket contains a value that is at least one hour old in comparison to the current time (i.e., the time at which the function or condition is applied to the ticket), but not yet two hours old. Thus, "Hours since created" identifies the condition being tested, "is" identifies a logical operator that in this case is equivalent to "=" or "==", and "1" is a constant that identifies the target value for the created field. Illustrative operators other than "is" include "less than" (or "<"), "less than or equal" (or "<="), "greater than" (or ">"), "greater than or equal" (or ">="), "not" (or "!="), and/or others.

In some embodiments, when dealing with the age of a ticket or a ticket value, the operator "is" is interpreted strictly, meaning that the value of the created field of a given ticket becomes one hour old after 60 minutes and ceases to be one hour old after 120 minutes (because it is now two hours old). Using T to represent the current time, time-based condition 214 may be illustratively represented as:

$$Boolean = (created + 1) \leq T < (created + 2) \qquad (1)$$

Equation (1) requires a ticket to be at least one hour old but not two hours old or older. *Boolean* evaluates to true or false depending on the time at which the condition is evaluated. In contrast to equation (1), equation (2) simply requires the ticket to have been created at least one hour ago with no upper bound:

$$Boolean = T \geq (created + 1) \qquad (2)$$

A function that implements equation (1) upon a ticket may be represented in pseudo code as follows:

```
// pseudo code
function1(ticket) {
      T_event = valueof("created", ticket)
      return [T_event + 1, T_event + 2)
}
```

This code assigns the value of the created field of a ticket to the variable T_event (as opposed to just T for the current time) and returns a time interval extending from one hour after the ticket was created to two hours after it was created. This time interval identifies the period of time during which the time-based condition will (or should) be true or satisfied. The interval is closed on the left (i.e., includes one hour exactly) but open on the right because it does not include two hours. As long as the automation that contains this condition is executed upon the ticket during this interval, the condition will evaluate to true.

A function that implements equation (2) upon a ticket may be represented in pseudo code as follows:

```
// pseudo code
function2 (ticket) {
      T_event = valueof("created", ticket)
      return [T_event + 1, ∞)
}
```

This code returns a time interval extending from one hour after the ticket was created to infinity. The interval is closed on the left (i.e., includes one hour exactly) but open on the right since it extends to infinity.

Depending on the construction of an automation, one or more functions may be created to represent its time-based conditions. For example, for simple automation 210 of FIG. 2A, one function is sufficient. However, for automation 230, two functions may be created, one for each path that contains at least one time-based condition. For example, path 230a may yield the following function:

```
// pseudo code
functions(ticket) {
      T_event1 = valueof("created", ticket)
```

```
T_event2 = valueof("update", ticket)
return (T_event1 + 2, ∞) ∩ (T_event2 + 1, ∞)
}
```

A result of executing an automation's set of functions against a ticket is the acquisition of a set of time intervals identifying when the various time-based conditions of the automation will be satisfied or true. That set of time intervals is then analyzed to identify at least one time interval (e.g., the earliest) during which all the time-based conditions of the automation, or all the time-based conditions of at least one path through the automation, will be satisfied. The automation (or a particular path of the automation) is then scheduled to run against the ticket as soon as possible. This may mean that it will run immediately (if the identified time interval is in progress) or be scheduled for some time in the future when the identified time interval opens. If no present or future time interval is identified, the automation need never be executed against the ticket again because its time-based conditions will never be satisfied.

In some embodiments, after a ticket is modified in some way and one or more automation functions are run against the modified ticket, something (e.g., a timer, an event, a process) will be created or configured to ensure each automation that needs to be scheduled to run against the updated ticket runs at an appropriate time. For example, when a function runs against a modified ticket and a valid time interval is identified during which its time-based conditions will all be satisfied, the system may schedule an event timer to fire at some point during the interval (e.g., the earliest possible time in the interval), and contain event data in a form such as <ticket_id, automation_id> to be emitted when the timer fires; the timer will clear (e.g., delete) itself after firing. A consumer of the event, such as automation engine 128 of FIG. 1, receives the event data when the event fires and executes the identified automation against the identified ticket. An event streaming system or platform such as Kafka® may be employed for this purpose.

It should be noted that when an automation function is run against a modified ticket, normally only time-based conditions will be applied. In other words, execution of a function normally does not involve examining or applying any non-time-based conditions of the automation that encompasses the function. However, in some embodiments one or more non-time-based conditions may indeed be applied.

For example, by tracking the execution of scheduled automations against specified tickets over time, it may be learned that some non-time-based condition or conditions frequently fail, thereby causing evaluation of the automation to fail, and rescheduling of the evaluation, even if all the automation's time-based conditions in a given path are or would be satisfied. In these embodiments, one or more obstructive non-time-based conditions of an automation path may be added to its function(s) and be applied when the function is executed against a modified ticket. Even if execution of the function successfully identifies a time interval during which the time-based conditions of the automation (or a particular path of the automation) will be satisfied, if the ticket as modified fails to satisfy an obstructive non-time-based condition, the function may identify or return no time interval for scheduling the automation, in which case the system will not schedule execution of the automation against the ticket. Each time the ticket is modified the function(s) will be applied again and possibly at some time the obstructive non-time-based condition will be satisfied and the time-based conditions will be satisfied during some identified time interval.

Further, in some embodiments, "critical" non-time-based conditions of an automation are identified and used to help scale the use of automations as the number of tickets continues to grow. In these embodiments, a critical non-time-based condition is a non-time-based condition that is found in every path through the automation. Therefore, a given automation cannot complete (and fire its action(s)) against a ticket if any of its critical non-time-based conditions fail. Furthermore, because such a condition is not time-based, once it has been tested against a given ticket and found to fail, it (and its automation) will always fail against that ticket (unless, possibly, the ticket or the automation are modified). Thus, critical non-time-based conditions may be selectively examined to help further reduce the use of computing resources while applying automations.

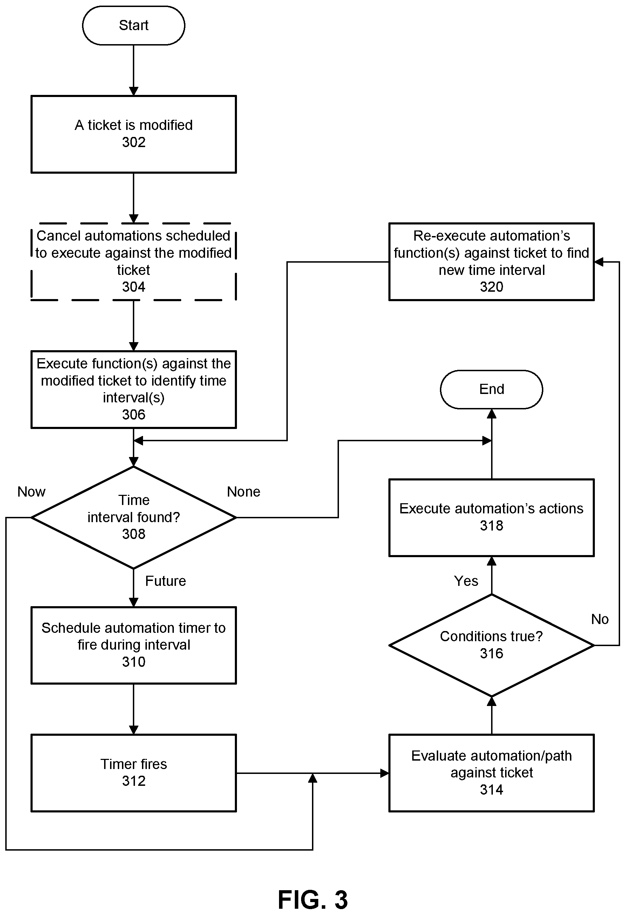

FIG. 3 is a flow chart illustrating a method of scheduling automations for execution, according to some embodiments.

In operation 302 of the illustrated method, a customer support ticket or other set of data is modified, such as by changing a value of a field of the dataset. In some implementations, creation of a new ticket is treated as a ticket modification and therefore triggers the following processing

In optional operation 304, automations that had been scheduled to execute the ticket may be canceled. This action may depend upon the manner in which the ticket is modified. For example, scheduled automations may be more likely to be canceled if the modification involves a principal field of the ticket (e.g., status, priority) and/or a field having a time or time-related value, and less likely if the modification is minor.

In operation 306, one or more automation functions are executed against the modified ticket to identify time intervals during which the time-based conditions of their corresponding automations (or automation paths) are likely to evaluate to true. In some implementations, automations may be created with criteria that are used to identify which tickets they should be run against. For example, some automations may run only against tickets submitted by particular end users; others may run against multiple or all end users of a provider.

In operation 308, the system determines (for each function evaluated in operation 306) whether a time interval was found during which all time-based conditions of the function are likely to be satisfied. If no time interval is found, the automation will never be executed against the ticket and the method may end for that function. Otherwise, if a time interval is identified that overlaps with the current time (i.e., the time the function is executed against the ticket), the method advances to operation 314. Finally, if a future time interval is identified, the method continues at operation 310.

In operation 310, an automation timer or some type of job or process is scheduled for the future, to execute during the identified time interval. In different embodiments, the timer may be configured differently. For example, and as described above, in some embodiments the timer emits an event when fired, for consumption by an entity that will use the event data (e.g., ticket id, automation id, time interval) to execute the automation against the ticket.

In operation 312, the timer eventually fires (unless canceled).

In operation 314, the specified automation or automation path is evaluated against the ticket. Even if all time-based conditions of the automation or path are satisfied, there is a chance that the automation will fail. In particular, one of the non-time-based conditions may fail. If the automation fails, a cause of the failure (e.g., the condition(s) that evaluated to false) may be logged.

In operation 316, the system determines whether all conditions of the automation or automation path evaluated to true. If so, the method continues to operation 318; otherwise, the method advances to operation 320.

In operation 318, the action or actions of the automation are executed, to further modify the ticket, to change some other data, or to perform some other activity. After operation 318, the method ends.

In operation 320, the automation's function (or functions if it comprises multiple paths) are re-executed against the modified ticket to find a new time interval at which to schedule a new automation timer to re-evaluate the automation against the ticket. In particular, the next earliest time interval. As an alternative, operation 320 may involve determining whether any critical non-time-based condition of the automation failed against the ticket. If so, the method can end because the automation will never be able to successfully execute against the ticket (unless/until one or both are modified). After operation 320, the method returns to operation 308.

It should be noted that, for each function that executes during operation 306, operations 308-320 may be conducted separately (but possibly in parallel). However, when functions corresponding to multiple paths through an automation are executed in operation 306, the interval that begins soonest may be retained for use throughout the rest of the method while the others are discarded or retained to facilitate rescheduling of the automation (e.g., in operation 320) if execution during the earliest time interval fails.

In some embodiments, after operation 302 or as part of operation 302 or operation 304, the method may involve examining critical non-time-based conditions of one or more automations with regard to the modified ticket. If a critical non-time-based condition of an automation fails against the modified ticket, it will always fail, and so the automation or ticket can be marked to prevent the automation from being evaluated or executed against the ticket, at least until the ticket (or the automation) changes again.

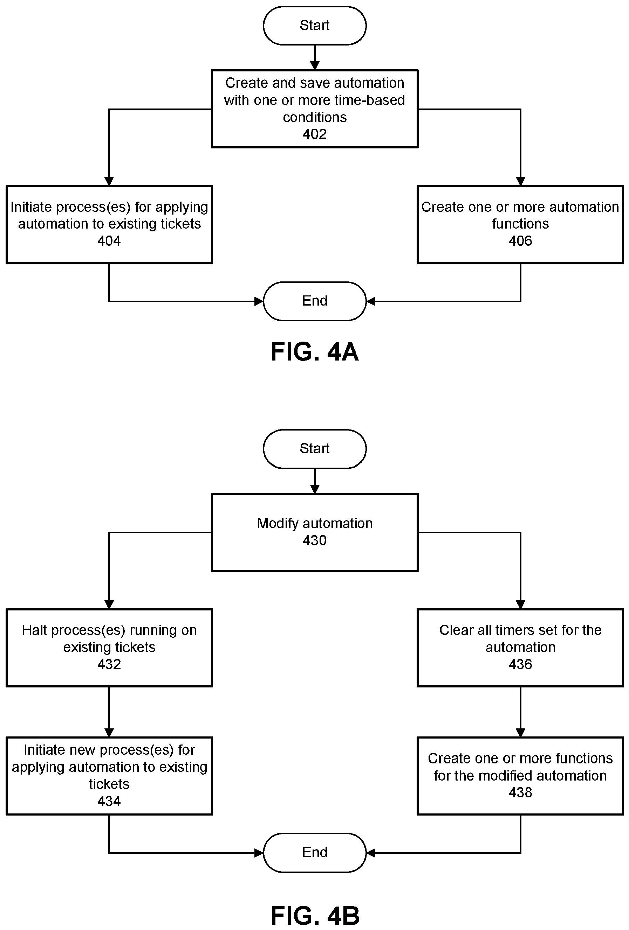

FIG. 4A is a flow chart illustrating a method of creating a new automation, according to some embodiments.

In operation 402 of the illustrated method, a new automation is created with one or more time-based conditions and is saved. In some embodiments, a customer support system provides a user interface for developers, programmers, providers, administrators, and/or other operators to create automations. The interface may include tools for the operator to use to select ticket fields (or components of other datasets) to include in the automation, configure them (e.g., with appropriate logical operators, values), link them, and specify actions to perform when the conditions (or one path of conditions) is satisfied.

In operation 404, one or more processes are initiated to apply the automation to existing tickets (tickets that existed when the automation was created). In some implementations, each process may attempt to execute the automation against some or all tickets in a repository. In some other implementations, a process may apply a search function of the automation (e.g., from operation 406) to first identify tickets that satisfy the conditions of the automation (or a path of the automation) and, for tickets for which a time interval encompassing the current time is yielded, execute the automation (or path) against those tickets. FIG. 5 illustrates with more detail a method of applying an automation to existing tickets.

In operation 406, which may proceed in parallel with operation 404, a function is configured for each path through the automation. As described earlier, the functions may be created in a native or assembly language to allow them to run quickly. These functions may then be employed as discussed above and depicted in FIG. 3.

FIG. 4B is a flow chart illustrating a method of modifying an existing automation, according to some embodiments.

In operation 430 of the illustrated method, an existing automation is modified to add, remove, or modify a condition for example.

In operation 432, processes that are running to apply the automation (if any - such as processes initiated in operation 404 of FIG. 4A) are stopped. In operation 434, one or more new processes are initiated to apply the modified automation to existing tickets.

In operation 436, all timers that have been set to execute the automation in the future against one or more specified tickets are cleared. In operation 438, new functions are created for each path through the modified automation.

It will be understood that, depending on the changes made in operation 430, some of the processing shown in FIG. 4B may be omitted. For example, if no time-based conditions are added, removed or modified, operations 436-438 may be omitted.

FIG. 5 is a flow chart illustrating a method of running a new (or modified) automation against pre-existing tickets, according to some embodiments. As discussed previously, this process may be separate from the scheduling of automations to run in the future on modified or new tickets.

In operation 502 of the method of FIG. 5, a variable (labeled last_updated in these embodiments) is initialized to the current time; this will prevent the process from executing against any tickets created or modified after the process begins.

In operation 504, one or more ticket repositories are searched for up to some maximum number N of tickets that were most recently updated prior to last_updated. The limit of N tickets is enforced in these embodiments to avoid impacting other computing processes.

The result of the search is determined in operation 506 and, if no tickets were found that the automation could run against, the method ends and need not be repeated. It may be recalled that some automations can only be applied against tickets submitted by certain customers or that match other criteria. Otherwise, if one or more tickets are located, the method continues at operation 508.

In operation 508, the located tickets are sorted by the time they were most recently updated (e.g., their "update time"). In operation 510, the automation is run against each ticket. Some tickets may be evaluated with the automation in parallel, others in sequence, depending on the computing resources allocated to the method.

In operation 512, the last_updated variable is reset to match the earliest update time among the tickets. In optional operation 514, a configurable delay or pause may be applied before repeating operations 504 through 514. As already indicated, these operations may repeat, working backward in time based on tickets' update times, until all preexisting tickets have been processed.

Because an automation must (a) contain at least one condition that can be true only once and/or (b) must contain an action that nullifies a condition (so that it can never be true again), once the automation is executed against a ticket in operation 510 and its actions are fired, the ticket cannot match the automation again.

Therefore, from one perspective, there have been described systems and methods for scheduling an automation (e.g., an automated workflow) to execute against a specified set of data (e.g., a customer support ticket) based on when time-based conditions within the automation will (or will likely) be true or satisfied with regard to the ticket. The automation's time-based conditions are represented by one or more functions designed to yield, when executed against a given ticket, a time interval during which those conditions will (or will likely) be true for that ticket. When a function produces a valid time interval, the corresponding automation is scheduled to run against the ticket during the interval. The functions may be quickly executed each time a ticket is modified (or created) because they may be created in assembly language or a native language of the computing platform that executes them.

Further examples are set out in the following numbered clauses.

Clause 1. A method, comprising: identifying one or more paths of execution of an automation configured to execute against datasets; for each path that comprises at least one time-based condition, defining a corresponding function to calculate a time interval during which the at least one time-based condition will be satisfied; and when a dataset is modified, executing one or more functions against the modified dataset to attempt to identify, for each corresponding path, a time interval during which the time-based conditions of the corresponding path will be satisfied.

Clause 2. The method of clause 1, further comprising, when a time interval is identified during which the time-based conditions of a path of the automation will be satisfied: scheduling evaluation of the automation against the modified dataset for a time during the time interval; and evaluating the automation against the modified dataset at the scheduled time.

Clause 3. The method of clause 2, wherein: scheduling evaluation of the automation comprises configuring a timer to fire an event at the scheduled time; firing the event at the scheduled time includes emitting an event identifying the automation and the modified dataset; and a consumer of the event performs said evaluation of the automation against the modified dataset.

Clause 4. The method of clause 1, 2 or 3, wherein each function comprises: for each of the at least one time-based conditions, first program code for retrieving from the modified dataset a time value associated with the time-based condition; and second program code for identifying the time interval during which the at least one time-based condition will be satisfied; wherein each time-based condition is associated with a parameter of the dataset that has a time-based value.

Clause 5. The method of any of clauses 1 to 4, wherein the automation comprises: the at least one time-based condition of each of the one or more paths of execution; and one or more actions to execute when at least one of the one or more paths of execution successfully execute.

Clause 6. The method of clause 5, wherein each automation further comprises: one or more non-time-based conditions.

Clause 7. The method of clause 5 or 6, wherein each automation further comprises: a critical non-time-based condition that is common to each of the one or more paths of execution.

Clause 8. The method of any of clauses 1 to 7, wherein a time-based condition is a condition that requires a comparison between the current time and a time-based value of a parameter of a dataset.

Clause 9. The method of any of clauses 1 to 8, wherein the datasets are customer support tickets.

Clause 10. A computer-readable medium comprising instructions that, when executed by a processor, cause the processor to become configured to perform a method comprising: identifying one or more paths of execution of an automation configured to execute against datasets; for each path that comprises at least one time-based condition, defining a corresponding function to calculate a time interval during which the at least one time-based condition will be satisfied; and when a dataset is modified, executing one or more functions against the modified dataset to attempt to identify, for each corresponding path, a time interval during which the time-based conditions of the corresponding path will be satisfied.

Clause 11. The computer-readable medium of clause 10, wherein the method further comprises, when a time interval is identified during which the time-based conditions of a path of the automation will be satisfied: scheduling evaluation of the automation against the modified dataset for a time during the time interval; and evaluating the automation against the modified dataset at the scheduled time.

Clause 12. The computer-readable medium of clause 11, wherein: scheduling evaluation of the automation comprises configuring a timer to fire an event at the scheduled time; firing the event at the scheduled time includes emitting an event identifying the automation and the modified dataset; and a consumer of the event performs said evaluation of the automation against the modified dataset.

Clause 13. The computer-readable medium of clause 10, 11 or 12, wherein each function comprises: for each of the at least one time-based conditions, first program code for retrieving from the modified dataset a time value associated with the time-based condition; and second program code for identifying the time interval during which the at least one time-based condition will be satisfied; wherein each time-based condition is associated with a parameter of the dataset that has a time-based value.

Clause 14. The computer-readable medium of any of clauses 10 to 13, wherein the automation comprises: the at least one time-based condition of each of the one or more paths of execution; and one or more actions to execute when at least one of the one or more paths of execution successfully execute.

Clause 15. The computer-readable medium of clause 14, wherein each automation further comprises: one or more non-time-based conditions.

Clause 16. The computer-readable medium of clause 14 or 15, wherein each automation further comprises: a critical non-time-based condition that is common to each of the one or more paths of execution.

Clause 17. The computer-readable medium of any of clauses 10 to 16, wherein a time-based condition is a condition that requires a comparison between the current time and a time-based value of a parameter of a dataset.

Clause 18. The computer-readable medium of any of clauses 10 to 17, wherein the datasets are customer support tickets.

Clause 19. A customer support system, comprising: a ticket repository storing customer support tickets; an automation repository storing automations to execute against customer support tickets stored in the ticket repository; and a controller comprising one or more processors and memory storing instructions that, when executed by the one or more processors, cause the controller to: identify one or more paths of execution of an automation configured to execute against datasets; for each path that comprises at least one time-based condition, define a corresponding function to calculate a time interval during which the at least one time-based condition will be satisfied; and when a dataset is modified, execute one or more functions against the modified dataset to attempt to identify, for each corresponding path, a time interval during which the time-based conditions of the corresponding path will be satisfied.

Clause 20. The system of clause 19, wherein the memory further stores instructions that, when executed by the one or more processors, further cause the controller to, when a time interval is identified during which the time-based conditions of a path of the automation will be satisfied: schedule evaluation of the automation against the modified dataset for a time during the time interval; and evaluate the automation against the modified dataset at the scheduled time.

Clause 21. The system of clause 20, wherein: scheduling evaluation of the automation comprises configuring a timer to fire an event at the scheduled time; firing the event at the scheduled time includes emitting an event identifying the automation and the modified dataset; and a consumer of the event performs said evaluation of the automation against the modified dataset.

Clause 22. The system of clause 19, 20 or 21, wherein each function comprises: for each of the at least one time-based conditions, first program code for retrieving from the modified dataset a time value associated with the time-based condition; and second program code for identifying the time interval during which the at least one time-based condition will be satisfied; wherein each time-based condition is associated with a parameter of the dataset that has a time-based value.

Clause 23. The system of any of clauses 19 to 22, wherein the automation comprises: the at least one time-based condition of each of the one or more paths of execution; and one or more actions to execute when at least one of the one or more paths of execution successfully execute.

Clause 24. The system of clause 23, wherein each automation further comprises: one or more non-time-based conditions.

Clause 25. The system of clause 23 or 24, wherein each automation further comprises: a critical non-time-based condition that is common to each of the one or more paths of execution.

Clause 26. The system of any of clauses 19 to 25, wherein a time-based condition is a condition that requires a comparison between the current time and a time-based value of a parameter of a dataset.

Clause 27. The system of any of clauses 19 to 26, wherein the datasets are customer support tickets.

An environment in which one or more embodiments described above are executed may incorporate a general-purpose computer or a special-purpose device such as a hand-held computer or communication device. Some details of such devices (e.g., processor, memory, data storage, display) may be omitted for the sake of clarity. A component such as a processor or memory to which one or more tasks or functions are attributed may be a general component temporarily configured to perform the specified task or function, or may be a specific component manufactured to perform the task or function. The term "processor" as used herein refers to one or more electronic circuits, devices, chips, processing cores and/or other components configured to process data and/or computer program code.

Data structures and program code described in this detailed description are typically provided using a computer-readable medium. A computer-readable medium may be a computer-readable storage medium, which may be any device or medium that can store code and/or data for use by a computer system. Computer-readable storage media may be termed "non-transitory" media and may include, but are not limited to, volatile memory; non-volatile memory; electrical, magnetic, and optical storage devices such as disk drives, magnetic tape, CDs (compact discs) and DVDs (digital versatile discs or digital video discs), solid-state drives, and/or other computer-readable media now known or later developed. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

Methods and processes described in the detailed description can be embodied as code and/or data, which may be provided using a computer-readable medium as described above. When a processor or computer system reads and executes the code and manipulates the data stored on the medium, the processor or computer system performs the methods and processes embodied as code and data structures and stored within the medium.

Furthermore, the methods and processes may be programmed into hardware modules such as, but not limited to, application-specific integrated circuit (ASIC) chips, field-programmable gate arrays (FPGAs), and other programmable-logic devices now known or hereafter developed. When such a hardware module is activated, it performs the methods and processes included within the module.

The foregoing embodiments have been presented for purposes of illustration and description only. They are not intended to be exhaustive or to limit this disclosure to the forms disclosed. Accordingly, many modifications and variations will be apparent to practitioners skilled in the art. The scope is defined by the appended claims, not the preceding disclosure.

**Claims**

1. A method, comprising:

   identifying one or more paths of execution of an automation configured to execute against datasets;
   for each path that comprises at least one time-based condition, defining a corresponding function to calculate a time interval during which the at least one time-based condition will be satisfied; and
   when a dataset is modified, executing one or more functions against the modified dataset to attempt to identify, for each corresponding path, a time interval during which the time-based conditions of the corresponding path will be satisfied.

2. The method of claim 1, further comprising, when a time interval is identified during which the time-based conditions of a path of the automation will be satisfied:

   scheduling evaluation of the automation against the modified dataset for a time during the time interval; and
   evaluating the automation against the modified dataset at the scheduled time.

3. The method of claim 2, wherein:

   scheduling evaluation of the automation comprises configuring a timer to fire an event at the scheduled time;
   firing the event at the scheduled time includes emitting an event identifying the automation and the modified dataset; and
   a consumer of the event performs said evaluation of the automation against the modified dataset.

4. The method of claim 1, 2 or 3, wherein each function comprises:

   for each of the at least one time-based conditions, first program code for retrieving from the modified dataset a time value associated with the time-based condition; and
   second program code for identifying the time interval during which the at least one time-based condition will be satisfied;
   wherein each time-based condition is associated with a parameter of the dataset that has a time-based value.

5. The method of any of claims 1 to 4, wherein the automation comprises:

   the at least one time-based condition of each of the one or more paths of execution; and
   one or more actions to execute when at least one of the one or more paths of execution successfully execute.

6. The method of claim 5, wherein each automation further comprises:
   one or more non-time-based conditions.

7. The method of claim 5 or 6, wherein each automation further comprises:
   a critical non-time-based condition that is common to each of the one or more paths of execution.

8. The method of any of claims 1 to 7, wherein a time-based condition is a condition that requires a comparison between the current time and a time-based value of a parameter of a dataset.

9. The method of any of claims 1 to 8, wherein the datasets are customer support tickets.

10. A computer-readable medium comprising instructions that, when executed by a processor, cause the processor to become configured to perform the method of any of claims 1 to 9.

11. A customer support system, comprising:

    a ticket repository storing customer support tickets;
    an automation repository storing automations to execute against customer support tickets stored in the ticket repository; and
    a controller comprising one or more processors and memory storing instructions that, when executed by the one or more processors, cause the controller to:

       identify one or more paths of execution of an automation configured to execute against datasets;
       for each path that comprises at least one time-based condition, define a corresponding function to calculate a time interval during which the at least one time-based condition will be satisfied; and
       when a dataset is modified, execute one or more functions against the modified dataset to attempt to identify, for each corresponding path, a time interval during which the time-based conditions of the corresponding path will be satisfied.

12. The system of claim 11, wherein the memory further stores instructions that, when executed by the one or more processors, further cause the controller to, when a time interval is identified during which the time-based conditions of a path of the automation will be satisfied:

    schedule evaluation of the automation against the modified dataset for a time during the time interval; and
    evaluate the automation against the modified dataset at the scheduled time.

13. The system of claim 12, wherein:

scheduling evaluation of the automation comprises configuring a timer to fire an event at the scheduled time; firing the event at the scheduled time includes emitting an event identifying the automation and the modified dataset; and

a consumer of the event performs said evaluation of the automation against the modified dataset.

14. The system of claim 11, 12 or 13, wherein each function comprises:

for each of the at least one time-based conditions, first program code for retrieving from the modified dataset a time value associated with the time-based condition; and

second program code for identifying the time interval during which the at least one time-based condition will be satisfied;

wherein each time-based condition is associated with a parameter of the dataset that has a time-based value.

15. The system of any of claims 11 to 14, wherein the automation comprises:

the at least one time-based condition of each of the one or more paths of execution;

one or more actions to execute when at least one of the one or more paths of execution successfully execute; and for example wherein each automation further comprises one or more selected from the group comprising:

one or more non-time-based conditions; and

a critical non-time-based condition that is common to each of the one or more paths of execution.

User
102a

User
Client
112a

User
102b

User
Client
112b

. . .

User
102m

User
Client
112m

Providers 140

Provider
Agent
142a

Provider
Client
144a

. . .

Provider
Agent
142k

Provider
Client
144k

Application 130a

Application 130b

. . .

Application 130n

Tickets 124

Automation
Scheduling
Functions 127

Automations
126

Ticket
Processor
122

Automation
Engine 128

Agent
132a

Agent
Client
134a

. . .

Agent
132n

Agent
Client
134n

Customer Support System 120

FIG. 1

Automation 210

Automation 230

FIG. 2A

**FIG. 2B**

Start

A ticket is modified
302

Cancel automations scheduled
to execute against the modified
ticket
304

Execute function(s) against the
modified ticket to identify time
interval(s)
306

Re-execute automation's
function(s) against ticket to find
new time interval
320

Now — Time interval found? 308 — None

Future

Schedule automation timer to
fire during interval
310

Timer fires
312

End

Execute automation's actions
318

Yes

Conditions true?
316

No

Evaluate automation/path
against ticket
314

FIG. 3

Start

Create and save automation
with one or more time-based
conditions
402

Initiate process(es) for applying
automation to existing tickets
404

Create one or more automation
functions
406

End

# FIG. 4A

Start

Modify automation
430

Halt process(es) running on
existing tickets
432

Clear all timers set for the
automation
436

Initiate new process(es) for
applying automation to existing
tickets
434

Create one or more functions
for the modified automation
438

End

# FIG. 4B

Start

Initialize last_updated variable
to current time
502

Search for up to N existing
tickets most recently updated
before last_updated
504

Any
tickets found?
506

No → End

Yes

Sort tickets by update time
508

Pause
514

Run the automation against
each ticket
510

Reset last_updated to earliest
update time among tickets
512

FIG. 5

Europäisches
Patentamt

European
Patent Office

Office européen
des brevets

# EUROPEAN SEARCH REPORT

Application Number

EP 23 19 4040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/222106 A1 (MALLAVARAPU ANEIL [US]) 14 July 2022 (2022-07-14) <br> * figures 1,2,6,8A,8B,12,15, 17 * <br> * paragraph [0030] – paragraph [0033] * <br> * paragraph [0070] * <br> * paragraph [0091] * <br> * paragraph [0102] * <br> * paragraph [0130] – paragraph [0133] * <br> * paragraph [0146] * <br> * paragraph [0152] * <br> * paragraph [0154] * <br> ----- | 1-15 | INV. <br> G06F9/48 <br> G06Q10/0631 <br> G06Q10/0633 <br> H04L41/5074 |
| A | CA 3 141 968 A1 (ZENDESK INC [US]) 18 May 2022 (2022-05-18) <br> * figures 12A,15 * <br> * paragraph [0049] * <br> * paragraph [0065] – paragraph [0069] * <br> * paragraph [0055] * <br> * paragraph [0120] * <br> * paragraph [0075] * <br> * claims 1,2,8,10,21 * <br> ----- | 1-15 | |

TECHNICAL FIELDS SEARCHED (IPC)

G06F
G06Q
H04L

The present search report has been drawn up for all claims

| Place of search | Date of completion of the search | Examiner |
|---|---|---|
| The Hague | 23 November 2023 | Suzic, Bojan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 4040

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2023

| Patent document cited in search report | | Publication date | Patent family member(s) | | Publication date |
|---|---|---|---|---|---|
| US 2022222106 | A1 | 14-07-2022 | US 2022222106 | A1 | 14-07-2022 |
| | | | US 2023251897 | A1 | 10-08-2023 |
| CA 3141968 | A1 | 18-05-2022 | BR 102021024723 | A2 | 15-03-2022 |
| | | | CA 3141968 | A1 | 18-05-2022 |
| | | | EP 4027289 | A1 | 13-07-2022 |

For more details about this annex : see Official Journal of the European Patent Office, No. 12/82

EPO FORM P0459